# EUROPÄISCHE PATENTSCHRIFT

(11) **EP 0 771 639 B1**
(45) Veröffentlichungstag und Bekanntmachung des Hinweises auf die Patenterteilung: **26.04.2000**
(21) Anmeldenummer: 96115756.7
(22) Anmeldetag: 02.10.1996
(51) Int. Cl.: B29C 45/76, B29C 45/82

(54) **Elektrisch-hydraulischer Hybridantrieb für Kunststoffmaschinen mit einem gemeinsamen Frequenzumformer**
Electric and hydraulic hybrid drive for a moulding machine with a common frequency converter
Entraînement hybride hydraulique et électrique d'une machine de moulage avec un convertisseur de fréquence commun

(30) Priorität: 02.11.1995 DE 19540695
(43) Veröffentlichungstag der Anmeldung: 07.05.1997
(73) Patentinhaber: Voith Turbo GmbH & Co. KG, 89522 Heidenheim (DE)
(72) Erfinder: Nagel, Günther, 89555 Steinheim (DE)
(74) Vertreter: Dr. Weitzel & Partner

(56) Entgegenhaltungen:
- EP-A- 0 643 472
- JP-A- 3 099 817
- US-A- 3 911 677
- US-A- 4 735 564

## Beschreibung

Die vorliegende Erfindung betrifft einen elektrisch-hydraulischen Hybridantrieb für Kunststoffmaschinen mit mindestens einem hydraulischen Aktuator, mindestens einem hydraulischen Aktuator, mindestens einer Fördereinrichtung zum Fördern der Hydraulikflüssigkeit zur Betätigung der hydraulischen Aktuatoren, mindestens einem Elektromotor zum Betreiben der Fördereinrichtung für die hydraulischen Aktuatoren und mindestens einem weiteren Elektromotor zum Antrieb der Extruderschnecke der Plastifiziervorrichtung.

Wie in vielen anderen Bereichen des Maschinenbaus wird auch im Bereich der Kunststoffmaschinen immer stärker auf Energieeinsparung und Kostenreduktion Wert gelegt. Mit der Verfügbarkeit von kompakten und kostengünstigen elektrisch-hydraulischen Hybridantriebseinheiten, wie sie beispielsweise aus dem deutschen Gebrauchsmuster G 94 08 542.0 oder der DE 42 31 784 bekanntgeworden sind, können erhebliche Energieeinsparungen erzielt werden, wenn diese zum Antrieb bzw. zur Betätigung von Werkzeugen verwendet werden. Als Antriebsquelle der elektrisch-hydraulischen Hybridantriebe gemäß der vorgenannten Druckschriften dienen Elektromotoren, die in der Regel zur Anpassung an die unterschiedlichen Betriebsbedingungen zusätzliche Elemente, beispielsweise Frequenzumrichter sowie Steuer- und Regelungseinheiten aufweisen können. Die Einzelgeräte bzw. die einzelnen Elemente sind untereinander über Anschlüsse verbunden, was sich als sehr kostenintensiv herausgestellt hat. Insbesondere trifft dies für die zur Ansteuerung der Elektromotoren notwendigen Frequenzumrichter zu, die ja jeder Motor braucht. Dies hatte den Nachteil, daß sich die gattungsgemäßen Kunststoffmaschinen mit elektrisch-hydraulischem Hybridantrieb durch einen hohen Platzbedarf und hohe Herstellungskosten ausgezeichnet haben.

JP-A-3 099 817 entspricht dem Oberbegriff des Anspruches 1.

Aufgabe der Erfindung ist es somit, einen elektrisch hydraulischen Hybridantrieb für eine Kunststoffmaschine zur Verfügung zu stellen, bei dem die eingangs erwähnten Nachteile überwunden werden und der für den Kunden kostengünstig sowie einfach zu handhaben ist. Die Anzahl der erforderlichen Einzelelemente, insbesondere der Frequenzumrichter, soll dabei minimiert werden.

Die erfindungsgemäße Lösung der Aufgabe ist durch die Merkmale des Anspruches 1 definiert. Vorteilhafte Ausführungen sind Gegenstand der Unteransprüche.

Erfindungsgemäß weist der elektrisch-hydraulische Hybridantrieb für eine Kunststoffmaschine eine Schaltvorrichtung und einen gemeinsamen Frequenzumrichter für eine Mehrzahl von Elektromotoren auf, wobei die einzelnen Elektromotoren verschiedene Aufgaben, wie beispielsweise das Betreiben einer Fördereinrichtung für die hydraulischen Elemente sowie den Antrieb der Extruderschnecke der Plastifizierungsvorrichtung wahrnehmen.

Ist die Kunststoffmaschine für sequentiellen Betrieb ausgelegt, d.h. erfolgen die mittels der Elektromotoren möglichen Arbeitsabläufe nacheinander, so ist die Schaltvorrichtung gemäß Anspruch 1 als Umschalter ausgebildet, so daß entweder der Elektromotor zum Antrieb der Extruderschnecke oder der Elektromotor für die Fördereinrichtung der hydraulischen Aktuatoren gespeist wird.

Vorteilhafterweise kann in einer anderen Ausführungsform vorgesehen sein, daß der eine Elektromotor beispielsweise zum Betreiben der Fördereinrichtung parallel zum anderen Elektromotor, der beispielsweise die Extruderschnecke antreibt, betrieben wird, d.h. das Umschalten des Pumpenelektromotors zum Extruderschneckenelektromotor entfällt, und es wird lediglich der Extruderschneckenelektromotor an den Pumpenelektromotor mittels eines Schalters an- bzw. abgeschaltet. Auf diese Art und Weise ist es möglich, beide Elektromotoren gleichzeitig zu betreiben oder alleine den Pumpenelektromotor. Auch die umgekehrte Verschaltung ist möglich.

In einer bevorzugten Ausführungsform ist die Fördereinrichtung zum Fördern der Hydraulikflüssigkeit zur Betätigung der hydraulischen Aktuatoren als drehzahlgeregelte Konstant- oder Verstellpumpe ausgebildet.

Mit Vorteil werden in der erfindungsgemäßen Antriebsvorrichtung für eine Kunststoffmaschine als Elektromotoren Drehstromasynchronmotoren eingesetzt, deren Drehzahl auf besonders einfache Art und Weise geregelt werden kann. In diesem Zusammenhang seien beispielsweise Drehstrommotoren mit Speisung über Zwischenkreisumrichter erwähnt.

Vorteilhafter Weise sind die hydraulischen Aktuatoren als Zylinder ausgeführt.

Eine besonders einfache Art der Schaltung ergibt sich, wenn sämtliche Elektromotoren des Antriebssystems gleich ausgeführt sind. In einer Weiterbildung der Erfindung weisen die Elektromotoren darüber hinaus dieselben Leistungsdaten auf.

Kann eine solche Anordnung nicht realisiert werden, und besitzen die Elektromotoren unterschiedliche Leistungsdaten, so kann vorteilhafter Weise in einer Weiterbildung der Erfindung vorgesehen sein, daß die jeweiligen Parametersätze der Elektromotoren im Frequenzumrichter beim Umschalten bzw. An- oder Abschalten geändert werden.

Die Erfindung soll nachfolgend anhand der Zeichnung beispielhaft beschrieben werden.

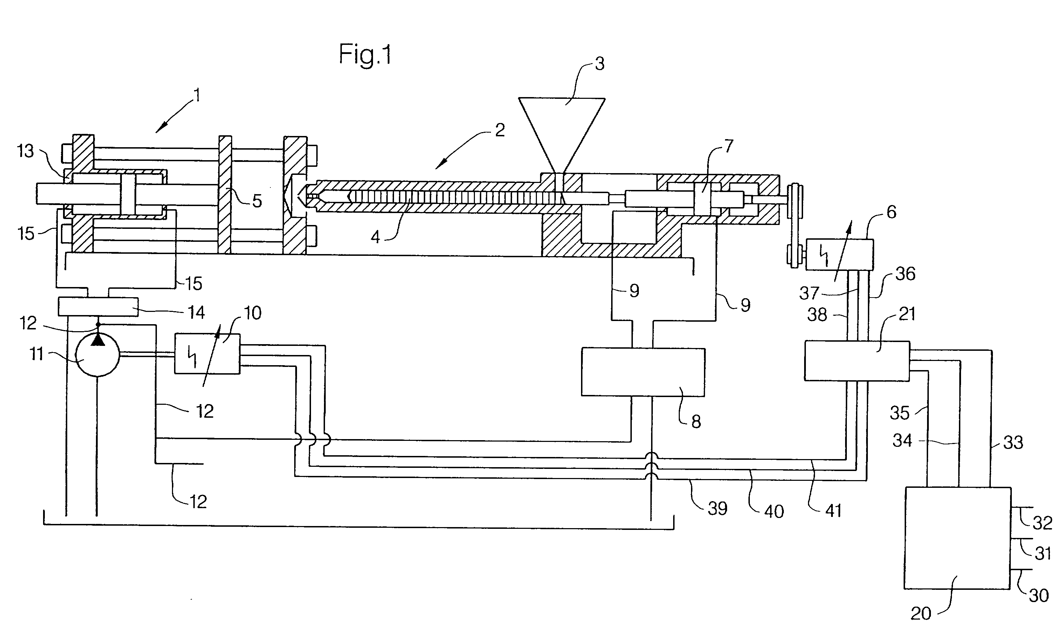

Es zeigt Fig. 1 eine schematische Ansicht einer Kunststoffmaschine mit dem erfindungsgemäßen elektrisch-hydraulischen Hybridantrieb.

In Fig. 1 ist eine Ausführungsform einer Kunststoffmaschine, die einen Werkzeugabschnitt 1 und einen Plastifizierabschnitt 2 aufweist, dargestellt. Im Plastifizierabschnitt 2 wird das beispielsweise durch den Trichter 3 der Kunststoffmaschine zugeführte Kunststoffgranulat mit Hilfe der Extruderschnecke 4 plastifiziert, so daß das Kunststoffmaterial mit Hilfe eines Werkzeuges 5 im Werkzeugabschnitt 1 beispielsweise geformt werden kann. Angetrieben wird die Extruderschnecke 4 durch einen Elektromotor 6, der vorteilhafterweise in der vorliegenden Ausführungsform als drehzahlgeregelter Drehstromasynchronmotor herkömmlicher Bauart ausgeschaltet ist, wie es beispielsweise aus "Dubbel" Taschenbuch für den Maschinenbau, 18. Auflage, Seiten V 23ff. bekannt ist. Die vorliegende Ausführungsform einer Kunststoffmaschine weist für das Einspritzen des Kunststoffes neben der Schnecke 4 auch noch einen hydraulischen Aktuator 7 auf, der als Zylinder ausgebildet ist. Die Steuerung des hydraulischen Aktuators 7 erfolgt mittels der Steuereinrichtung 8 hydraulisch. Hierzu wird dem Zylinder 7 über die Hydrauliksteuerleitungen 9, die vom Steuergerät 8 zum Zylinder führen, Betriebsmittel, im vorliegenden Fall eine Hydraulikflüssigkeit zu- bzw. abgeführt. Die Förderung der Hydraulikflüssigkeit zur Steuereinrichtung 8 erfolgt mittels einer Fördervorrichtung, im vorliegenden Fall einer durch einen Elektromotor 10 angetriebenen Pumpe 11, über die Hydraulikzufuhrleitung 12. In der vorliegenden Ausführungsform handelt es sich bei dem Elektromotor 10 für die Förderpumpe wiederum um einen Drehstromasynchronmotor, vorzugsweise gleicher Bauart wie der Drehstromasynchronmotor 6 zum Antrieb der Schnecke 4.

Der Werkzeugabschnitt 1 umfaßt zur Betätigung des Werkzeuges 5 einen weiteren hydraulischen Aktuator 13, der wie der hydraulische Aktuator 7 als Zylinder ausgeführt ist. Dieser hydraulische Aktuator 13 dient zur Betätigung des Werkzeuges 5, beispielsweise dem Verfahren des Werkzeuges oder dem Aufbau eines bestimmten Arbeitsdruckes. Der hydraulische Aktuator 13 wird über eine weitere hydraulische Steuereinrichtung 14 und Hydraulikleitungen 15 gesteuert. Die Förderung des zur Steuerung notwendigen Betriebsmittels, vorzugsweise einer Hydraulikflüssigkeit, erfolgt wie im Falle der Steuereinrichtung 8 mittels derselben Pumpe 11 über die Hydraulikzufuhrleitung 12, die sich zu den verschiedenen Verbrauchern hin verzweigt. So können neben den genannten hydraulischen Aktuatoren 7, 13 auch noch weitere Verbraucher vorgesehen sein. Die Drehzahlverstellung von gesteuerten und geregelten Antrieben, bei denen wie im vorliegenden Fall Drehstromasynchronmotoren zum Einsatz gelangen, wird heute vorzugsweise mittels einer Frequenzsteuerung (Dubbel Taschenbuch für den Maschinenbau, 18. Auflage, 1995, Seiten V 40ff.)durchgeführt. Hierbei gelangen Frequenzumrichter gemäß dem Stand der Technik zum Einsatz, die eine kontinuierliche Drehzahlverstellung von Drehstrommotoren in der Regel in beide Drehrichtungen ermöglichen. Besonders bevorzugt sind Drehstrommotorantriebe mit selbstgeführtem Wechselrichter, wie sie beispielsweise in Dubbel, Taschenbuch für den Maschinenbau, 18. Aufgabe, 1995 auf Seite V45 beschrieben sind.

Erlaubt der Ablaufplan für die Kunststoffmaschine, daß die Drehstromasynchronmotoren wie im vorliegenden Fall nicht gleichzeitig, sondern sequentiell eingesetzt werden, so ergibt sich die erfindungsgemäße Möglichkeit, einen gemeinsamen Frequenzumrichter 20 zusammen mit einer als Umschalter 21 ausgebildeten Schaltvorrichtung zum Steuern der beiden Drehstrommotoren 6 und 10 vorzusehen. Die Entkoppelung der beiden Motoren wird in diesem speziellen Ausführungsbeispiel durch eine nach dem gemeinsamen Frequenzumrichter angeordnete Umschaltvorrichtung 21, wie sie beispielsweise aus Dubbel, Taschenbuch für den Maschinenbau, 18. Auflage, 1995, Seiten V 48 ff.bekannt ist, bewerkstelligt.

Die Versorgung der Drehstromasynchronmotoren erfolgt wie nachfolgend beschrieben. Vom Netz oder der Bordversorgung führen drei Drehstromleitungen 30, 31, 32 zum Frequenzumrichter 20. Mittels des Frequenzumrichters wird die Drehzahl der Elektromotoren 6 bzw. 10 durch eine stellbare Speisung über die Motorenspeiseleitungen 33, 34, 35 geregelt. Die Motorspeiseleitungen 33, 34, 35 führen in vorliegendem Ausführungsbeispiel zur Umschaltvorrichtung 21. Mit Hilfe der Umschaltvorrichtung kann die stellbare Speisung entweder auf den Elektromotor 6 über die Leitungen 36, 37 und 38 gelegt werden oder auf den Motor 10 durch Umschaltung auf die Zuleitungen 39, 40, 41. Die Ansteuerung der Elektromotoren 6 und 10 durch den Frequenzumrichter 20 erfolgt entsprechend den Steuerkennlinien der eingesetzten Asynchronmaschine (siehe hierzu auch Dubbel, Taschenbuch für den Maschinenbau, 18. Auflage, 1995, Seite V40). Die Steuerkennlinie hängt von der Bauart des jeweiligen Elektromotors ab. Daher ist es vorteilhaft sowohl für den Antrieb der Extruderschnecke 4 als auch der Pumpe 11 einen Drehstromasynchronmotor gleicher Bauart vorzusehen. In diesem Fall sind die Steuerkennlinien beider Asynchronmaschinen gleich, so daß die im Frequenzumrichter gespeicherten Parametersätze, beispielsweise die Einstellung der Rampen bei einem digitalen Frequenzumrichter, beim Umschalten von dem einen auf den anderen Elektromotor nicht geändert werden müssen, falls gleiche Lastverhältnisse vorliegen.

Werden für den Antrieb der Pumpe 11 und der Extruderschnecke 4 unterschiedliche Elektromotoren eingesetzt, so können in einer kompakten Bauweise im Frequenzumrichter die Parametersätze der jeweiligen Motoren abgelegt sein, die beim Umschalten mit geändert werden.

Des weiteren ist es in einer alternativen Ausführungsform möglich, die im vorangegangenen Beispiel als Umschalter 21 ausgebildete Schaltvorrichtung, die lediglich die Umschaltung der Speisung von einem auf den anderen Elektromotor ermöglicht - und somit einen sequentiellen Betrieb der Elektromotoren voraussetzt - als Schalter auszuführen, mit dem die Zuleitungen zum Pumpenelektromotor 10 an die fest mit dem Frequenzumrichter 20 verbundene Drehstromleitungen zum Extruderelektromotor 6 nur an- oder abgeschaltet werden.

Ebenso ist es möglich, eine feste Verbindung zwischen Frequenzumrichter 20 und dem Pumpenelektromotor 10 vorzusehen und den Extruderelektromotor 6 zu- oder wegzuschalten. In beiden Fällen ist es möglich, beide Motoren gleichzeitig oder den mit dem Frequenzumrichter 20 fest verbundenen alleine zu betreiben.

Welche der zuvor dargestellten Verschaltungen gewählt wird, hängt von den Arbeitsabläufen ab, die mit der Kunststoffmaschine gefahren werden sollen.

In einer besonders kompakten Ausführungsform kann vorgesehen sein, daß Frequenzumrichter 20 und Schaltvorrichtung in einem gemeinsamen Gehäuse integriert werden.

Durch die Verwendung eines gemeinsamen Frequenzumrichters für die Ansteuerung unterschiedlicher Elektromotoren zum Betrieb einer Kunststoffmaschine ist es gegenüber den Kunststoffmaschinen dieser Gattung nach dem Stand der Technik somit möglich, sowohl Kosten zu sparen als auch eine kompakte Bauweise zu realisieren.

## Patentansprüche

1. Elektrisch-hydraulischer Hybridantrieb für Kunststoffmaschinen mit
1.1 einem Werkzeugabschnitt (1) sowie einem Plastifizierabschnitt (2);
1.2 hydraulischen Aktuatoren (7, 13);
1.3 Elektromotoren, wobei mindestens ein Elektromotor zum Antrieb der Schnecke (4) einer Plastifiziervorrichtung dient;
1.4 einer Schaltvorrichtung;
1.5 sowie einen gemeinsamen Frequenzumrichter (20) zur Ansteuerung der Elektromotoren;
dadurch gekennzeichnet, daß
1.6 hydraulische Aktuatoren (7, 13) sowohl für den Werkzeugabschnitt (1) wie für den Plastifizierabschnitt (2) vorgesehen sind, wobei
1.7 mindestens eine gemeinsame Fördereinrichtung zum Fördern von Hydraulikflüssigkeit zur Betätigung der hydraulischen Aktuatoren (7, 13) vorgesehen ist und
1.8 mindestens ein Elektromotor (10) zum Betreiben der Fördereinrichtung für die hydraulischen Aktuatoren.

2. Antrieb nach Anspruch 1, dadurch gekennzeichnet, daß die Schaltvorrichtung eine Umschaltvorrichtung (21) ist.

3. Antrieb nach Anspruch 1, dadurch gekennzeichnet, daß die Schaltvorrichtung ein Schalter ist, so daß der Elektromotor (10) zum Antrieb der Fördereinrichtung (11) für die hydraulischen Aktuatoren (7, 13) parallel, zum Elektromotor (6) betrieben werden kann.

4. Antrieb nach Anspruch 1, dadurch gekennzeichnet, daß die Schaltvorrichtung ein Schalter ist, so daß der Elektromotor (6) zum Antrieb der Schnecke (4) der Plastifiziervorrichtung parallel zum Elektromotor (10) betrieben werden kann.

5. Antrieb nach Anspruch 1 bis 4, dadurch gekennzeichnet, daß die Fördereinrichtung zum Fördern der Hydraulikflüssigkeit eine drehzahlgeregelte Konstant- oder Verstellpumpe (11) umfaßt.

6. Antrieb nach einem der Ansprüche 1 bis 5, dadurch gekennzeichnet, daß die Elektromotoren (6, 10) Drehstromasynchronmotoren sind.

7. Antrieb nach einem der Ansprüche 1 bis 6, dadurch gekennzeichnet, daß die hydraulischen Aktuatoren (7, 13) Zylinder sind.

8. Antrieb nach einem der Ansprüche 1 bis 7, dadurch gekennzeichnet, daß die Elektromotoren (6, 10) systemgleich ausgeführt sind.

9. Antrieb nach einem der Ansprüche 1 bis 8, dadurch gekennzeichnet, daß die Elektromotoren (6, 10) dieselben Leistungsdaten aufweisen.

10. Antrieb nach einem der Ansprüche 1 bis 9, dadurch gekennzeichnet, daß die Elektromotoren (6, 10) zum Betreiben der Fördereinrichtung und zum Antrieb der Schnecke (4) der Plastifiziervorrichtung unterschiedliche Leistungsdaten aufweisen, und daß die den jeweiligen Elektromotoren zugeordneten Parametersätze beim Umschalten bzw. An- oder Abschalten im Frequenzumrichter mitgeändert werden.

## Claims

1. Electric and hydraulic hybrid drive for a moulding machine with
1.1 a mould section (1) and a plasticizing section (2);
1.2 hydraulic actuators (7,13);
1.3 electric motors, whereby at least one electric motor is used for driving the worm (4) of a plasticizing device;
1.4 a switching device;
1.5 and a common frequency converter (20) for driving the electric motors;
characterised in that
1.6 hydraulic actuators (7, 13) are provided both for the mould section (1) and for the plasticizing section (2), whereby
1.7 at least one common conveyor device is provided for conveying hydraulic fluid to activate the hydraulic actuators (7, 13) and
1.8 at least one electric motor (10) for operating the conveyor device for the hydraulic actuators.

2. Drive according to claim 1, characterised in that the switching device is a switch-over device (21).

3. Drive according to claim 1, characterised in that the switching device is a switch, so that the electric motor (10) can be operated to drive the conveyor device (11) for the hydraulic actuators (7, 13) parallel to the electric motor (6).

4. Drive according to claim 1, characterised in that the switching device is a switch, so that the electric motor (6) can be operated to drive the worm (4) of the plasticizing device parallel to the electric motor (10).

5. Drive according to claim 1 to 4, characterised in that the conveyor device for conveying the hydraulic fluid comprises a speed-controlled constant or variable delivery pump (11).

6. Drive according to one of claims 1 to 5, characterised in that the electric motors (6, 10) are three-phase asynchronous motors.

7. Drive according to one of claims 1 to 6, characterised in that the hydraulic actuators (7, 13) are cylinders.

8. Drive according to one of claims 1 to 7, characterised in that the electric motors (6, 10) are designed with identical systems.

9. Drive according to one of claims 1 to 8, characterised in that the electric motors (6, 10) have the same performance specifications.

10. Drive according to one of claims 1 to 9, characterised in that the electric motors (6, 10) for operating the conveyor device and for driving the worm (4) of the plasticizing device have different performance specifications, and in that the parameters allocated to the respective electric motors are changed on switching over or switching on or off in the frequency converter.

## Revendications

1. Entraînement hybride électro-hydraulique pour des machines de traitement de matières plastiques comprenant
1.1 une section outil (1) et une section de plastification (2) ;
1.2 des actionneurs hydrauliques (7, 13) ;
1.3 des moteurs électriques, un moteur électrique au moins servant à l'entraînement de la vis (4) du dispositif de plastification ;
1.4 un dispositif de commande ;
1.5 ainsi qu'un convertisseur de fréquence (20) commun pour commander les moteurs électriques ;
caractérisé par le fait que
1.6 des actionneurs (7, 13) hydrauliques sont prévus aussi bien pour la section outil (1) que pour la section de plastification (2),
1.7 au moins un dispositif de refoulement commun pour refouler du liquide hydraulique pour l'actionnement des actionneurs hydrauliques étant prévu ainsi
1.8 qu'au moins un moteur électrique (10) pour l'entraînement du dispositif de refoulement pour les actionneurs hydrauliques.

2. Entraînement selon la revendication 1, caractérisé par le fait que le dispositif de commande est un dispositif de commutation (21).

3. Entraînement selon la revendication 1, caractérisé par le fait que le dispositif de commande est un interrupteur, tel que le moteur électrique (10) entraînant le dispositif de pompage (11) pour les actionneurs hydrauliques (7, 13) peut fonctionner en parallèle avec le moteur électrique (6).

4. Entraînement selon la revendication 1, caractérisé par le fait que le dispositif de commande est un interrupteur, tel que le moteur électrique (6) entraînant la vis (4) du dispositif de plastification peut fonctionner en parallèle avec le moteur électrique (10).

5. Entraînement selon les revendications 1 à 4, caractérisé par le fait que le dispositif de refoulement pour le refoulement du liquide hydraulique est une pompe (11) à débit constant ou réglable, dont la vitesse de rotation est régulée.

6. Entraînement selon une des revendications 1 à 5, caractérisé par le fait que les moteurs électriques (6, 10) sont des moteurs asynchrones à courant triphasé.

7. Entraînement selon une des revendications 1 à 6, caractérisé par le fait que les actionneurs hydrauliques (7, 13) sont des vérins.

8. Entraînement selon une des revendications 1 à 7, caractérisé par le fait que les moteurs électriques (6, 10) sont identiques.

9. Entraînement selon une des revendications 1 à 8, caractérisé par le fait que les moteurs électriques (6, 10) ont les mêmes caractéristiques de puissance.

10. Entraînement selon une des revendications 1 à 9, caractérisé par le fait que les moteurs électriques (6, 10) pour l'entraînement du dispositif de refoulement et pour l'entraînement de la vis (4) du dispositif de plastification présentent des caractéristiques de puissance différentes et par le fait que les ensembles de paramètres associés aux moteurs concernés sont modifiés dans le convertisseur de fréquence lors de la commutation ou lors du démarrage ou de l'arrêt.
